# EUROPÄISCHE PATENTSCHRIFT

(11) **EP 3 653 796 B1**
(45) Veröffentlichungstag und Bekanntmachung des Hinweises auf die Patenterteilung: **30.08.2023**
(21) Anmeldenummer: 19200805.0
(22) Anmeldetag: 01.10.2019
(51) Int. Cl.: E02F 3/36

(54) **SCHNELLWECHSLER UND SCHNELLWECHSELSYSTEM MIT EINEM DERARTIGEN SCHNELLWECHSLER**
QUICK CHANGER AND QUICK CHANGE SYSTEM COMPRISING SUCH A QUICK CHANGER
DISPOSITIF DE CHANGEMENT RAPIDE ET SYSTÈME DE CHANGEMENT RAPIDE DOTÉ D'UN TEL DISPOSITIF DE CHANGEMENT RAPIDE

(30) Priorität: 14.11.2018 DE 102018128479
(43) Veröffentlichungstag der Anmeldung: 20.05.2020
(73) Patentinhaber: OilQuick Deutschland KG, 82297 Steindorf (DE)
(72) Erfinder: SCHMID, Sebastian, 82297 Steindorf (DE)
(74) Vertreter: Charrier Rapp & Liebau

(56) Entgegenhaltungen:
- GB-A- 2 441 322
- US-A1- 2010 031 539
- US-A1- 2010 232 920
- US-A1- 2016 186 405

## Beschreibung

Die Erfindung betrifft einen Schnellwechsler nach dem Oberbegriff des Anspruchs 1. Die Erfindung betrifft außerdem ein Schnellwechselsystem mit einem derartigen Schnellwechsler und einem zugehörigen Adapter.

Solche Schnellwechsler werden zum einfachen und bequemen Wechseln von unterschiedlichen Anbaugeräten an Baumaschinen eingesetzt. Mit einem derartigen Schnellwechsler können z.B. Schwenklöffel, Greifer, Scheren, Verdichter, Magnete, Hydraulikhammer oder andere Anbaugeräte in wenigen Sekunden und mit hohem Sicherheitsstandard von einer Fahrerkabine aus z.B. an einem Ausleger eines Baggers an- bzw. abgekuppelt werden.

Die GB 2 441 322 A offenbart einen Schnellwechsler, der zwischen den frontseitigen klauenförmigen Aufnahmen eine zwischen einer eingeklappten Offenstellung und einer ausgeklappten Sperrstellung schwenkbare Sperrklinke aufweist. Zum Ankoppeln eines Anbauwerkzeugs wird die Sperrklinke durch ein bolzenförmiges Kopplungselement zunächst eingeklappt und fällt dann infolge der Schwerkraft in die heruntergeklappte Sperrstellung zurück, sobald das bolzenförmige Kopplungselement seine ordnungsgemäße Anlagestellung innerhalb der klauenförmigen Aufnahmen erreicht. Zum erneuten Wechsel des Anbauwerkzeugs muss der Schnellwechsler in eine vorbestimmte Stellung bewegt werden, damit sich die Sperrklinke durch die Schwerkraft in die Offenstellung bewegen kann.

In der US 2010/0232920 A1 ist ein Schnellwechsler offenbart, der ebenfalls eine zwischen einer eingeklappten Wechselstellung und einer ausgeklappten Sperrstellung bewegliche Sperrklinke aufweist. Hier wird die Sperrklinke bei Ankoppeln eines Anbauwerkzeugs durch ein bolzenförmiges Kopplungselement eingeklappt und wird durch eine Feder wieder in die ausgeklappte Sperrstellung gedrückt.

In der US 6 154 989 A ist ein weiterer Schnellwechsler offenbart. Dieser enthält einen Träger, der an einer Seite erste Aufnahmen zur Halterung eines an einem Anbaugerät vorgesehenen ersten Kopplungselements und an der anderen Seite zweite Aufnahmen mit einem zwischen einer Lösestellung und einer Verriegelungsstellung bewegbaren Verriegelungselement zur lösbaren Halterung eines zweiten Kopplungselements aufweist. Um ein Herabfallen der Anbaugeräte und eine dadurch mögliche Gefährdung von Personen bei einer unbeabsichtigten Bewegung des Verriegelungselements in eine Lösestellung zu verhindern, ist an dem Träger eine Fangeinrichtung mit einer Hakenanordnung zur Halterung einer mit Gegenhaken am Anbaugerät zusammenwirkenden Querstange vorgesehen. Da die für die Sicherung vorgesehene Hakenanordnung einteilig mit dem Träger ausgeführt ist, wird bei einer durch unsachgemäße Anwendung verursachten Beschädigung der Hakenanordnung immer auch der gesamte Träger in Mitleidenschaft gezogen. Daher muss der Schnellwechsler zur Durchführung eines Wechselvorgangs auch besonders genau und sorgfältig positioniert werden.

Aufgabe der Erfindung ist es, einen kompakt aufgebauten Schnellwechsler der eingangs genannten Art und ein Schnellwechselsystem mit einem derartigen Schnellwechsler zu schaffen, die einen vereinfachten Kupplungsvorgang ermöglichen und eine erhöhte Sicherheit gewährleisten.

Diese Aufgabe wird durch einen Schnellwechsler mit den Merkmalen des Anspruchs 1 und durch ein Schnellwechselsystem mit den Merkmalen des Anspruchs 12 gelöst. Zweckmäßige Ausgestaltungen und vorteilhafte Weiterbildungen der Erfindung sind in den Unteransprüchen angegeben.

Bei dem erfindungsgemäßen Schnellwechsler weist die Fangeinrichtung mindestens einen am Träger schwenkbar angeordneten Fanghaken auf, an dem ein zur Betätigung durch das erste Kopplungselement ausgebildetes und von der Verriegelungseinrichtung unabhängig betätigbares Steuerelement zur Steuerung der Schwenkbewegung des Fanghakens zwischen einer Ein- und Ausklappstellung angeordnet ist. Über das Steuerelement kann eine vom Anbaugerät initiierte Bewegung des Fanghakens erfolgen. Es sind keine separaten Antriebe erforderlich. Das Steuerelement sorgt außerdem dafür, dass sich der Fanghaken nur dann in die einen Wechselvorgang ermöglichende Ausklappstellung bewegen lässt, wenn das Kopplungselement korrekt in dem Fanghaken positioniert ist.

In der Ausklappstellung des Fanghakens kann ein Anbaugerät durch entsprechendes Absetzen auf dem Boden gewechselt werden, während der Fanghaken in der Einklappstellung die Aufnahme für ein Kopplungselement umschließt. Durch das Einklappen des Fanghakens ist eine besonders kompakte Bauweise erreichbar, wodurch die Gefahr eventueller Kollisionen mit einem Anbaugerät erheblich reduziert werden kann. Von dem klappbaren Fanghaken kann ein Anbaugerät bei einem unbeabsichtigten Lösen der Verriegelungseinrichtung durch Eingriff des Kopplungselements an dem Fanghaken in einer Fangposition aufgefangen und dadurch am Schnellwechsler gehalten werden. Die Steuerung der Schwenkbewegung des Fanghakens erfolgt unabhängig von der Betätigung der Verriegelungseinrichtung durch ein Kopplungselement an dem am Schnellwechsler anzukuppelnden Anbaugerät. Es sind keine zusätzlichen Steuer- oder Betätigungseinrichtungen erforderlich. Durch den Fanghaken wird ein Anbaugerät auch bei eventuellen Fehlbedienungen sicher aufgefangen. Der Fanghaken ist äußerst robust und bietet eine hohe Sicherheit. Ein durch unsachgemäße Anwendung beschädigter Fanghaken kann außerdem auch ohne Austausch des gesamten Trägers einfach ausgewechselt werden. Es muss nicht der gesamte Träger demontiert oder gewechselt werden.

In einer besonders zweckmäßigen Ausführung kann das Steuerelement als ein in Richtung der ersten Aufnahme vorstehender Ansatz des Fanghakens mit einer oberen Steuerfläche zur Anlage am an dem in die erste Aufnahme eingreifenden Kopplungselement ausgebildet sein. An dem Träger kann eine Aussparung zur Aufnahme des Steuerelements in der Einklappstellung des Fanghakens vorgesehen sein. Das Steuerelement kann aber auch anders ausgestaltet sein.

Die Fangeinrichtung kann einen oder mehrere voneinander getrennte oder miteinander verbundene Fanghaken umfassen. In einer besonders zweckmäßigen Ausführung kann die Fangeinrichtung zwei an den ersten Aufnahmen des Trägers schwenkbar angeordnete Fanghaken enthalten. Die Fanghaken können als separate und getrennt voneinander schwenkbare Fanghaken ausgeführt sein. Sie können aber auch miteinander verbunden sein.

Eine besonders sichere Halterung kann dadurch erreicht werden, dass der Fanghaken das Kopplungselement halbkreisförmig umschließt. Der Fanghaken kann an seiner Unterseite eine Anschlagfläche zur Anlage an einer stirnseitigen Anlagefläche des Trägers aufweisen. An seinem oberen Ende kann der Fanghaken eine Anlagefläche zur Anlage an einer entsprechenden Gegenfläche des Trägers enthalten.

In einer robusten und konstruktiv vorteilhaften Ausgestaltung kann der Fanghaken an einem Anschlusssteg des Trägers um eine Querachse schwenkbar angeordnet sein. Zur schwenkbaren Anordnung des Fanghakens kann der Anschlusssteg eine Querbohrung und der Fanghaken geeignete Aufnahmebohrungen zur Aufnahme der Querachse aufweisen.

Zweckmäßigerweise kann der Fanghaken auf der Querachse über Lagerbuchsen drehbar gelagert sein. Dadurch wird eine reibungsarme und gegen Verschleiß gut geschützte Anlenkung der Fanghaken an den Träger erreicht. Die Querachse kann durch einen Stift gegenüber dem Träger gegen Herausfallen und Verdrehung gesichert sein.

Die Erfindung betrifft außerdem eine Schnellwechseleinrichtung, die einen vorstehend beschriebenen Schnellwechsler und einem mit dem Schnellwechsler kuppelbaren Adapter umfasst.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Schnellwechselsystem mit einem Schnellwechsler und einem Adapter in einer Kupplungsstellung;
- **Figur 2**: das Schnellwechselsystem von Figur 1 in einer zum Teil geschnittenen Seitenansicht;
- **Figur 3**: den Schnellwechsler von Figur 1 mit der Fangeinrichtung in einer geöffneten Wechselstellung;
- **Figur 4**: eine vergrößerte Darstellung des Bereichs A von Figur 1;
- **Figur 5**: eine vergrößerte Darstellung des Bereichs B von Figur 3;
- **Figur 6**: den Schnellwechsler von Figur 1 mit der Fangeinrichtung in einer geschlossenen Fangstellung;
- **Figur 7**: eine vergrößerte Darstellung des Bereichs C von Figur 6 und
- **Figur 8**: eine vergrößerte Detailansicht eines Fanghakens in einer Explosionsdarstellung.

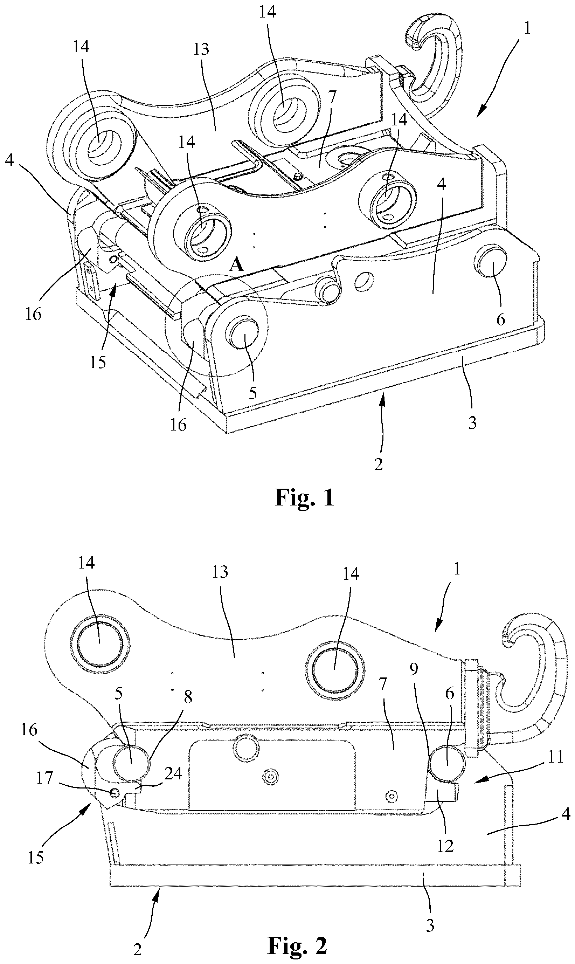

In Figur 1 ist ein aus einem Schnellwechsler 1 und einem zugehörigen Adapter 2 bestehendes Schnellwechselsystem zum einfachen und bequemen Wechseln von unterschiedlichen Anbaugeräten an Baumaschinen, insbesondere Baggern, gezeigt. Mit einem derartigen Schnellwechselsystem können z.B. Schwenklöffel, Greifer, Scheren, Magnete, Verdichter, Hydraulikhammer oder andere mechanische bzw. hydraulische Anbaugeräte einfach und bequem von einer Fahrerkabine aus an einem Ausleger oder einem anderen Anbauteil eines Baggers oder anderen Baufahrzeugs an- bzw. abgekuppelt werden.

Der an einem Anbaugerät befestigbare Adapter 2 enthält eine Grundplatte 3 und zwei zueinander parallele Seitenwangen 4, zwischen denen ein erstes bolzenförmiges Kopplungselement 5 und ein davon in einem vorgegeben Abstand beabstandetes zweites bolzenförmiges Kopplungselement 6 zur lösbaren Verbindung mit dem Schnellwechsler 1 angeordnet sind. Die beiden bolzenförmigen Kopplungselemente 5 und 6 können in entsprechende Bohrungen in den Seitenwangen 4 eingesteckt und dort fixiert sein.

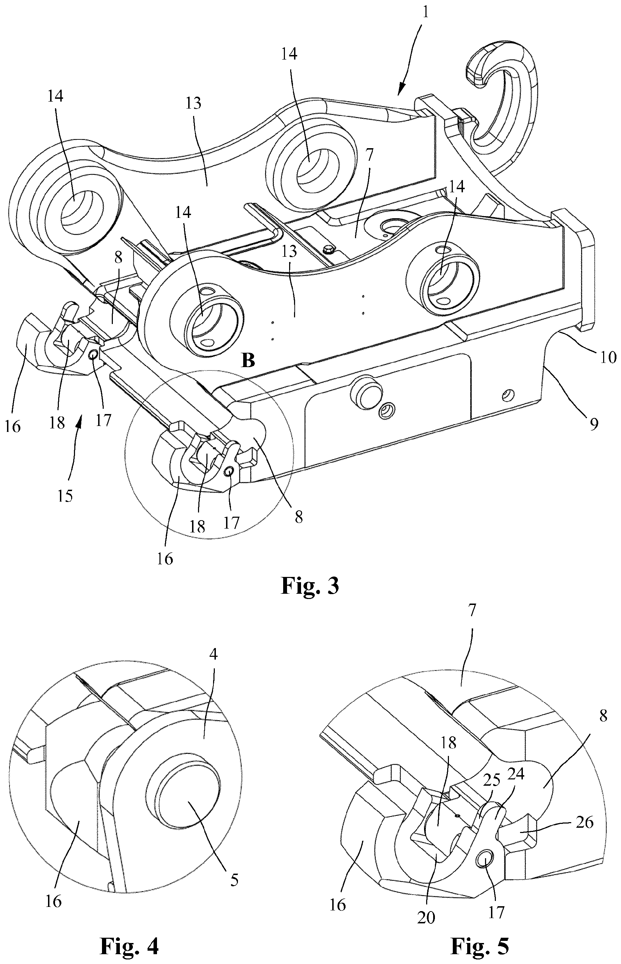

Der auch in Figur 3 in einer Perspektive dargestellte Schnellwechsler 1 enthält einen als Schweißkonstruktion oder als Gußteil ausgeführten Träger 7, der an einer Seite nach hinten offene erste Aufnahmen 8 zur Aufnahme und Halterung des ersten bolzenförmigen Kopplungselements 5 und an der anderen Seite nach unten offene zweite Aufnahmen 9 zur Aufnahme und Halterung des zweiten bolzenförmigen Kopplungselements 6 aufweist.

Bei dem gezeigten Ausführungsbeispiel enthält der Schnellwechsler 1 an der einen Seite des Trägers 7 zwei voneinander beabstandete Aufnahmen 8 für das erste Kopplungselement 5 und auf der anderen Seite zwei Aufnahmen 9 für das zweite Kopplungselement 6. Die nach hinten offenen ersten Aufnahmen 8 sind klauen- oder gabelförmig ausgeführt. Die nach unten offenen zweiten Aufnahmen 9 weisen eine gekrümmte untere Anlagefläche 10 zur Anlage des zweiten bolzenförmigen Kopplungselements 6 auf. An den beiden Aufnahmen 9 ist eine in Figur 2 erkennbare Verriegelungseinrichtung 11 zur verriegelbaren Halterung des zweiten Kopplungselements 6 am Träger 7 vorgesehen. Die zwischen einer Löse- und Verriegelungsstellung bewegbare Verriegelungseinrichtung 11 umfasst bei der gezeigten Ausführung zwei bolzenförmige Verriegelungselemente 12, die innerhalb des Trägers 7 verschiebbar geführt und durch einen Zylinder zwischen einer eingefahrenen Lösestellung zum Lösen oder Ankoppeln des Adapters 2 bzw. eines Anbaugeräts und einer in Figur 2 gezeigten ausgefahrenen Verriegelungsstellung bewegbar sind. In der ausgefahrenen Verriegelungsstellung werden die nach unten offenen zweiten Aufnahmen 9 von den in Führungsbohrungen im Träger 7 verschiebbar angeordneten Verriegelungselementen 12 an der Unterseite geschlossen, so dass das zweite bolzenförmige Kopplungselement 6 von den bolzenförmigen Verriegelungselementen 12 untergriffen wird.

Der Träger 7 enthält an seiner Oberseite zwei zueinander parallele Seitenteile 13, in denen durchgängige Öffnungen 14 für nicht dargestellte Befestigungsbolzen zur Befestigung des Schnellwechslers 1 an einem Ausleger eines Baggers oder einem Anschlussteil eines anderen Baufahrzeugs vorgesehen sind.

Um mit Hilfe des Schnellwechslers 1 ein Anbaugerät anzukuppeln, wird der in der Regel an einem Ausleger eines Baggers angeordnete Schnellwechsler 1 zunächst so bewegt, dass das am Adapter 2 oder direkt an dem Anbaugerät angeordnete erstes Kopplungselement 5 in die klauen- bzw. gabelförmigen Aufnahmen 8 auf der einen Seite des Schnellwechslers 1 eingefahren wird. Dann wird der Schnellwechsler 1 mit noch zurückgezogenen Verriegelungselementen 12 um das erste bolzenförmige Kopplungselement 5 so geschwenkt, dass das zweite Kopplungselement 6 am Adapter oder Anbaugerät zur Anlage an den Anlageflächen 10 der nach unten offenen Aufnahmen 9 auf der anderen Seite des Schnellwechslers 1 gelangt. Anschließend können die in Führungsbohrungen im Träger 7 des Schnellwechslers 1 verschiebbar angeordneten Verriegelungselemente 12 hydraulisch ausgefahren werden, so dass das zweite bolzenförmige Kopplungselement 6 von den beiden Verriegelungselementen 12 an dem Schnellwechsler 1 untergriffen und das Anbaugerät somit an dem Schnellwechsler 1 gehalten wird.

Um zu verhindern, dass sich ein an den Schnellwechsler 1 angekoppeltes Anbaugerät bei einer durch Fehlbedienung oder Störungen bedingten, unbeabsichtigten Lösebewegung des Verriegelungselements von dem Schnellwechsler löst und dann evtl. in einer angehobenen Stellung des Schnellwechslers herabfällt, ist an dem Träger 2 eine zusätzlich Fangeinrichtung 15 vorgesehen. Die Fangeinrichtung 15 ist zum Umgreifen des am Adapter 2 oder Anbaugerät angeordneten und mit den ersten Aufnahmen 8 in Eingriff gelangenden Kopplungselements 5 ausgeführt. Die Fangeinrichtung 15 ist derart ausgebildet, dass ein Anbaugerät bei einem unbeabsichtigten Lösen aus der Kupplungsposition durch Eingriff des Kopplungselements an der Fanghakenanordnung in einer Fangposition aufgefangen und dadurch am Schnellwechsler gehalten wird.

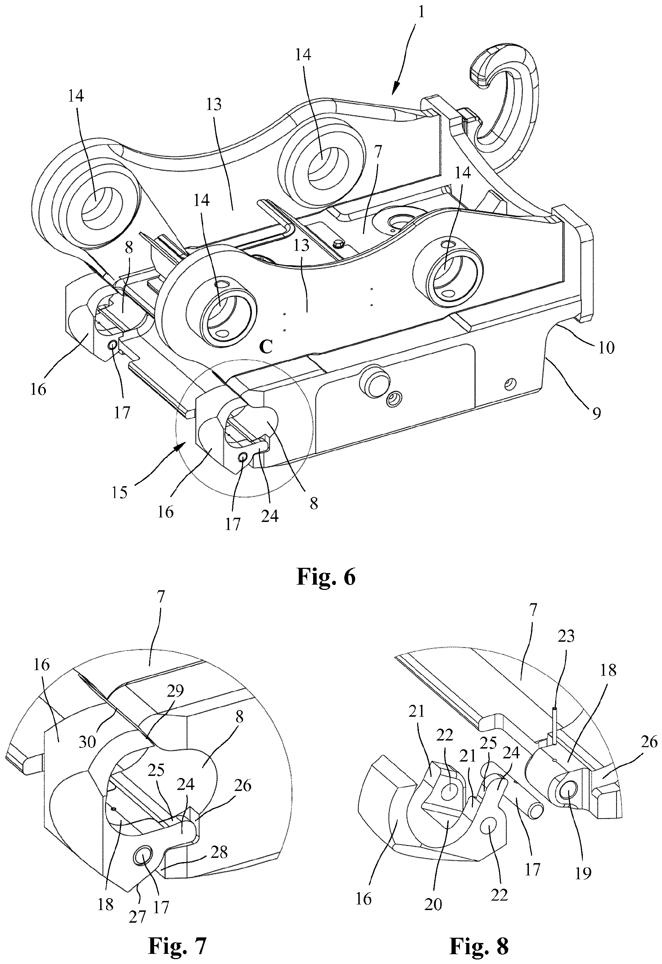

Bei der gezeigten Ausführung umfasst die Fangeinrichtung 15 zwei separate Fanghaken 16, die nicht starr an dem Träger 2 des Schnellwechslers 1 angeordnet, sondern über eine Art Scharnier um eine Querachse 17 schwenkbar an dem Träger 1 angelenkt sind. Die beiden Fanghaken 16 sind an den beiden hinteren Aufnahmen 8 angeordnet und derart ausgebildet, dass sie ein Kopplungselement 5 am Adapter 2 oder einem Anbaugerät umgreifen und das Anbaugerät bei einem unbeabsichtigten Lösen des Schnellwechslers 1 durch Eingriff des Kopplungselements 5 an den Fanghaken 16 in einer Fangposition auffangen können. Durch die schwenkbare Anordnung können sich die Fanghaken 16 zwischen einer in den Figuren 3 und 5 gezeigten Ausklappstellung und einer in den Figuren 6 und 7 dargestellten Einklappstellung bewegen.

Wie besonders aus Figur 8 ersichtlich ist, weist der Träger 7 nach hinten vorstehende Anschlussstege 18 mit einer durchgängigen Querbohrung 19 zum Anschluss der Fanghaken 16 auf. Die am Träger 7 unterhalb der Aufnahmen 8 nach hinten vorstehend angeordneten Anschlussstege 18 ragen in einen Zwischenraum 20 zwischen zwei nach vorne in Richtung des Trägers 7 vorstehenden Schenkeln 21 des Fanghakens 14. In den beiden Schenkeln 21 des Fanghakens 14 befinden sind miteinander fluchtende Aufnahmebohrungen 22, die in der montierten Stellung des Fanghakens 16 koaxial zur Querbohrung 19 im Anschlusssteg 18 sind. In die Querbohrung 19 des Anschlussstegs 18 ist die horizontale Querachse 17 eingesetzt und über einen Stift 23 gegen Herausfallen und Verdrehung gesichert.

In den Figuren 5 und 8 ist besonders gut erkennbar, dass an dem Fanghaken 16 ferner ein zur Betätigung durch das erste Koppelelement 5 ausgebildetes Steuerelement 24 vorgesehen ist. Über das Steuerelement 24 kann der Fanghaken 16 durch das Koppelelement 5 beim Eingreifen in die Aufnahme 8 aus der in den Figuren 3 und 5 gezeigten Ausklappstellung in die in den Figuren 1 und 2 gezeigte Einklappstellung bewegt werden. Das Steuerelement 24 sorgt außerdem dafür, dass sich der Fanghaken 16 nur dann in die einen Wechselvorgang ermöglichende Ausklappstellung bewegen lässt, wenn das Koppelelement 5 korrekt in dem Fanghaken 16 positioniert ist. Bei der gezeigten Ausführung ist das Steuerelement 24 ein in Richtung der ersten Aufnahme 8 vorstehender Ansatz mit einer oberen Steuerfläche 25, die in der Einklappstellung des Fanghakens 16 mit der Innenkontur der Aufnahme 8 abschließt und in der Ausklappstellung des Fanghakens 16 gegenüber der Innenkontur der Aufnahme 8 nach innen vorsteht. An dem Träger 7 ist eine seitliche Aussparung 26 zur Aufnahme des Steuerelements 25 in der Einklappstellung des Fanghakens 16 vorgesehen

Der Fanghaken 16 ist derart ausgestaltet, dass er das Kopplungselement 5 mit etwa 180° halbkreisförmig umschließt. Dadurch kann eine besonders sichere Halterung in jeder Stellung des Schnellwechslers 1 erreicht werden. In der Einklappstellung des Fanghakens 16 wird dabei die Aufnahme 8 nach hinten vollständig von dem Fanghaken 16 umschlossen. In dieser Einklappstellung steht der Fanghaken 16 auch nicht besonders weit gegenüber dem Träger 7 vor, so dass sich eine kompakte Bauweise ergibt und die Gefahr eventueller Kollisionen mit einem Anbaugerät erheblich reduziert werden kann. Auch wenn das Kopplungselement 5 aus der Aufnahme 8 ausrückt und von dem Fanghaken 16 aufgefangen wird, ist durch die Form des Fanghakens 16 eine sichere Halterung gewährleistet.

Wie aus Figur 7 hervorgeht, weist der Fanghaken 16 an seiner Unterseite eine Anschlagfläche 27 zur Anlage an einer stirnseitigen Anlagefläche 28 des Trägers 7 unterhalb der Aufnahme 8 auf. In seiner nach unten geschwenkten Ausklappstellung liegt der Fanghaken 16 mit seiner Anschlagfläche 27 an den Anlagefläche 28 des Trägers 7 an, so dass der Fanghaken 16 in dieser unteren Fangstellung gehalten wird. An seinem oberen Ende enthält der Fanghaken eine Anlagefläche 29, die in der nach oben geschwenkten Einklappstellung des Fanghakens 16 zur Anlage an einer entsprechenden Gegenfläche 30 des Trägers 7 gelangt.

Die vorstehend beschriebene Fangeinrichtung 15 stellt eine zusätzliche Sicherungseinrichtung dar, durch die ein Anbaugerät auch bei einem unbeabsichtigten Lösen der Verriegelung sicher gefangen und gehalten werden kann. Die Fangeinrichtung 15 ist unabhängig von der Verriegelungseinrichtung 11 und mit dieser nicht gekoppelt.

### Bezugszeichenliste

- 1: Schnellwechsler
- 2: Adapter
- 3: Grundplatte
- 4: Seitenwange
- 5: Erstes Kopplungselement
- 6: Zweites Kopplungselement
- 7: Träger
- 8: Erste Aufnahme
- 9: Zweite Aufnahme
- 10: Anlagefläche
- 11: Verriegelungseinrichtung
- 12: Verriegelungselement
- 13: Seitenteil
- 14: Öffnung
- 15: Fangeinrichtung
- 16: Fanghaken
- 17: Querachse
- 18: Anschlusssteg
- 19: Querbohrung
- 20: Zwischenraum
- 21: Schenkel
- 22: Aufnahmebohrung
- 23: Stift
- 24: Steuerelement
- 25: Steuerfläche
- 26: Aussparung
- 27: Untere Anschlagfläche
- 28: Anlagefläche
- 29: Obere Anschlagfläche
- 30: Gegenfläche

## Patentansprüche

1. Schnellwechsler (1) zum Wechseln von Anbaugeräten an einer Baumaschine, der einen Träger (7), an der einen Seite des Trägers (7) angeordnete erste Aufnahmen (8) für ein erstes Kopplungselement (5), an der anderen Seite des Trägers (7) angeordnete zweite Aufnahmen (9) für ein zweites Kopplungselement (6), eine den zweiten Aufnahmen (9) zugeordnete, zwischen einer Löse- und Verriegelungsstellung bewegbare Verriegelungseinrichtung (11) und eine am Träger (7) angeordnete Fangeinrichtung (15) mit mindestens einem am Träger (7) schwenkbar angeordneten Fanghaken (16) zum Auffangen des Anbaugeräts enthält, **dadurch gekennzeichnet, dass** an dem Fanghaken (16) ein zur Betätigung durch das erste Kopplungselement (5) ausgebildetes und von der Verriegelungseinrichtung (11) unabhängig betätigbares Steuerelement (24) zur Steuerung der Schwenkbewegung des Fanghakens (16) zwischen einer Ein- und Ausklappstellung angeordnet ist.

2. Schnellwechsler (1) nach Anspruch 1, **dadurch gekennzeichnet, dass** das Steuerelement (24) als ein in Richtung der ersten Aufnahme (8) vorstehender Ansatz des Fanghakens (16) mit einer oberen Steuerfläche (25) zur Anlage am dem in die erste Aufnahme (8) eingreifenden ersten Kopplungselements (5) ausgebildet ist.

3. Schnellwechsler (1) nach Anspruch 1 oder 2, **dadurch gekennzeichnet, dass** an dem Träger (7) eine Aussparung (26) zur Aufnahme des Steuerelements (24) in der Einklappstellung des Fanghakens (16) vorgesehen ist.

4. Schnellwechsler (1) nach einem der Ansprüche 1 bis 3, **dadurch gekennzeichnet, dass** die Fangeinrichtung (15) zwei an den ersten Aufnahmen (8) des Trägers (7) schwenkbar angeordnete Fanghaken (16) aufweist.

5. Schnellwechsler (1) nach einem der Ansprüche 1 bis 4, **dadurch gekennzeichnet, dass** der Fanghaken (16) derart ausgebildet ist, dass er das Kopplungselement (5) halbkreisförmig umschließt.

6. Schnellwechsler (1) nach einem der Ansprüche 1 bis 5, **dadurch gekennzeichnet, dass** der Fanghaken (16) an seiner Unterseite eine Anschlagfläche (27) zur Anlage an einer stirnseitigen Anlagefläche (28) des Trägers (7) aufweist.

7. Schnellwechsler (1) nach einem der Ansprüche 1 bis 6, **dadurch gekennzeichnet, dass** der Fanghaken (16) an seinem oberen Ende eine Anlagefläche (29) zur Anlage an einer entsprechenden Gegenfläche (30) des Trägers (7) enthält.

8. Schnellwechsler (1) nach einem der Ansprüche 1 bis 7, **dadurch gekennzeichnet, dass** der Fanghaken (16) an einem Anschlusssteg (18) des Trägers (7) um eine Querachse (17) schwenkbar angeordnet ist.

9. Schnellwechsler (1) nach Anspruch 8, **dadurch gekennzeichnet, dass** der Anschlusssteg (18) eine Querbohrung (19) und der Fanghaken (16) Aufnahmebohrungen (22) zur Aufnahme der Querachse (17) enthält.

10. Schnellwechsler (1) nach Anspruch 8 oder 9, **dadurch gekennzeichnet, dass** die Querachse (17) durch einen Stift (23) gegenüber dem Träger (7) gegen Herausfallen und Verdrehung gesichert ist.

11. Schnellwechsler (1) nach einem der Ansprüche 8 bis 10, **dadurch gekennzeichnet, dass** der Anschlusssteg (18) in einen Zwischenraum (20) zwischen zwei vorstehenden Schenkeln (21) des Fanghakens (16) ragt.

12. Schnellwechseleinrichtung mit einem Schnellwechsler (1) und einem mit dem Schnellwechsler (1) kuppelbaren Adapter (2), **dadurch gekennzeichnet, dass** der Schnellwechsler nach einem der Ansprüche 1 bis 11 ausgebildet ist.

## Claims

1. Quick coupler (1) for changing attachments on a construction machine, comprising a carrier (7), first receiving members (8) arranged on one side of the carrier (7) for a first coupling member (5), second receiving members (9) arranged on the other side of the carrier (7) for a second coupling member (6), a locking unit (11) associated with the second receiving members (9) and movable between a release position and a locking position, and a catch unit (15) arranged on the carrier (7) and having at least one catch hook (16) pivotably arranged on the carrier (7) for catching the attachment, **characterized in that** a control member (24), which is designed to be actuated by the first coupling member (5) and can be actuated independently of the locking unit (11), is arranged on the catch hook (16) for controlling the pivoting movement of the catch hook (16) between a folded-in and folded-out position.

2. Quick coupler (1) according to claim 1, **characterized in that** the control member (24) is designed as a projection of the catch hook (16) projecting in the direction of the first receiving member (8) and having an upper control surface (25) for abutment against the first coupling member (5) engaging in the first receiving member (8).

3. Quick coupler (1) according to claim 1 or 2, **characterized in that** a recess (26) is provided on the carrier (7) for receiving the control member (24) in the folded-in position of the catch hook (16).

4. Quick coupler (1) according to one of claims 1 to 3, **characterized in that** the catch unit (15) has two catch hooks (16) pivotally arranged on the first receiving members (8) of the carrier (7).

5. Quick coupler (1) according to one of claims 1 to 4, **characterized in that** the catch hook (16) is designed in such a way that it encloses the coupling member (5) in a semicircular shape.

6. Quick coupler (1) according to one of claims 1 to 5, **characterized in that** the catch hook (16) has a stop surface (27) on its underside for abutment against an abutment surface (28) on the front side of the carrier (7).

7. Quick coupler (1) according to one of claims 1 to 6, **characterized in that** the catch hook (16) includes at its upper end an abutment surface (29) for abutment against a corresponding counter surface (30) of the carrier (7).

8. Quick coupler (1) according to one of claims 1 to 7, **characterized in that** the catch hook (16) is arranged on a connecting bar (18) of the carrier (7) so as to be pivotable about a transverse axis (17).

9. Quick coupler (1) according to claim 8, **characterized in that** the connecting bar (18) contains a cross bore (19) and the catch hook (16) contains receiving bores (22) for receiving the transverse axis (17).

10. Quick coupler (1) according to claim 8 or 9, **characterized in that** the transverse axis (17) is secured against falling out and rotation with respect to the carrier (7) by a pin (23).

11. Quick coupler (1) according to one of the claims 8 to 10, **characterized in that** the connecting bar (18) projects into an intermediate space (20) between two projecting legs (21) of the catch hook (16).

12. Quick coupler device with a quick coupler (1) and an adapter (2) that can be coupled to the quick coupler (1), **characterized in that** the quick coupler is designed according to one of claims 1 to 11.

## Revendications

1. Dispositif de changement rapide (1) pour changer des accessoires au niveau d'un engin de chantier, qui contient un support (7), des premières réceptions (8) agencées sur le un côté du support (7) pour un premier élément de couplage (5), des secondes réceptions (9) agencées sur l'autre côté du support (7) pour un second élément de couplage (6), un équipement de verrouillage (11) attribué aux secondes réceptions (9) et déplaçable entre une position de libération et une position de verrouillage et un équipement de captation (15) agencé contre le support (7) avec au moins un crochet de captation (16) agencé de façon pivotante contre le support (7) pour capter l'accessoire, **caractérisé en ce que** contre le crochet de captation (16) est agencé un élément de commande (24), conçu pour l'actionnement par le premier élément de couplage (5) et pouvant être actionné indépendamment de l'équipement de verrouillage (11), pour commander le mouvement de pivotement du crochet de captation (16) entre une position escamotée et une position déployée.

2. Dispositif de changement rapide (1) selon la revendication 1, **caractérisé en ce que** l'élément de commande (24) est conçu en tant qu'épaulement, faisant saillie dans la direction des premières réceptions (8), du crochet de captation (16) avec une surface de commande (25) supérieure pour une installation contre le premier élément de couplage (5) venant en prise dans la première réception (8).

3. Dispositif de changement rapide (1) selon la revendication 1 ou 2, **caractérisé en ce qu'**un évidement (26) pour la réception de l'élément de commande (24) dans la position escamotée du crochet de captation (16) est prévu contre le support (7).

4. Dispositif de changement rapide (1) selon l'une des revendications 1 à 3, **caractérisé en ce que** l'équipement de captation (15) présente deux crochets de captation (16) agencés de façon pivotante contre les premières réceptions (8) du support (7).

5. Dispositif de changement rapide (1) selon l'une des revendications 1 à 4, **caractérisé en ce que** le crochet de captation (16) est conçu de manière à entourer de façon semi-circulaire l'élément de couplage (5).

6. Dispositif de changement rapide (1) selon l'une des revendications 1 à 5, **caractérisé en ce que** le crochet de captation (16) présente une surface de butée (27) sur son côté inférieur pour une installation contre une surface de contact (28) sur le côté frontal du support (7).

7. Dispositif de changement rapide (1) selon l'une des revendications 1 à 6, **caractérisé en ce que** le crochet de captation (16) contient une surface de contact (29) à son extrémité supérieure pour une installation contre une contre-surface (30) correspondante du support (7).

8. Dispositif de changement rapide (1) selon l'une des revendications 1 à 7, **caractérisé en ce que** le crochet de captation (16) est agencé de façon pivotante autour d'un axe transversal (17), contre une barrette de raccordement (18) du support (7).

9. Dispositif de changement rapide (1) selon la revendication 8, **caractérisé en ce que** la barrette de raccordement (18) contient un alésage transversal (19) et le crochet de captation (16) contient des alésages de réception (22) pour la réception de l'axe transversal (17).

10. Dispositif de changement rapide (1) selon la revendication 8 ou 9, **caractérisé en ce que** l'axe transversal (17) est sécurisé par rapport au support (7), par une cheville (23), contre la chute et la rotation.

11. Dispositif de changement rapide (1) selon l'une des revendications 8 à 10, **caractérisé en ce que** la barrette de raccordement (18) dépasse jusque dans un espace intermédiaire (20) entre deux branches (21) du crochet de captation (16) qui font saillie.

12. Équipement de changement rapide avec un dispositif de changement rapide (1) et un adaptateur (2) qui peut être couplé au dispositif de changement rapide (1), **caractérisé en ce que** le dispositif de changement rapide est conçu selon l'une des revendications 1 à 11.
